# EUROPÄISCHE PATENTSCHRIFT

(11) **EP 2 188 143 B1**
(45) Veröffentlichungstag und Bekanntmachung des Hinweises auf die Patenterteilung: **22.06.2011**
(21) Anmeldenummer: 08785490.7
(22) Anmeldetag: 11.08.2008
(51) Int. Cl.: B60J 10/04

(54) **ABDECKLEISTE**
TRIM STRIP
BAGUETTE COUVRE-JOINT

(30) Priorität: 11.09.2007 DE 102007043218
(43) Veröffentlichungstag der Anmeldung: 26.05.2010
(73) Patentinhaber: Cadea Gesellschaft Für Anwendung Und Realisierung Computerunterstützter Systeme Mbh, 82223 Eichenau (DE)
(72) Erfinder: ERTL, Harald, 82223 Eichenau (DE)
(74) Vertreter: Grünecker, Kinkeldey, Stockmair & Schwanhäusser Anwaltssozietät
(86) Internationale Anmeldenummer: PCT/EP2008/006610
(87) Internationale Veröffentlichungsnummer: WO 2009/033539

(56) Entgegenhaltungen:
- EP-A- 0 295 989
- EP-A- 0 443 345
- DE-A1- 3 410 193
- DE-A1- 4 339 033
- DE-A1- 19 922 749
- FR-A- 2 453 041
- FR-A- 2 727 182
- GB-A- 2 369 849

## Beschreibung

Die Erfindung betrifft eine Abdeckleiste für den Rand eines Scheibenschachts einer in den Scheibenschacht absenkbaren Seitenscheibe eines Pkws mit einem starren, eine U-förmige Aufnahme aufweisenden Befestigungsprofil, mit einer zumindest teilweise gummielastischen Dichtung, welche eine mit der Seitenscheibe zusammenwirkende Dichtlippe und ein in die Aufnahme einsetzbares Dichtprofil aufweist und mit mindestens einer in der U-förmigen Aufnahme angeordneten Nut mit mindestens einer Hinterschneidung, in die eine an dem Dichtprofil angeordnete Rippe eingreift.

Eine solche Abdeckleiste wird benachbart zum Scheibenschacht auf den Türrahmen der jeweiligen Tür des Pkws aufgeschoben. Dabei sind verschiedene Befestigungsmöglichkeiten der Abdeckleiste an dem Türrahmen bekannt. So ist es z.B. möglich, Dichtungsprofile mit einer Metalleinlage zu verwenden, die auf den Türrahmen aufgeklemmt werden und so für einen sicheren Halt der Abdeckleiste auf dem Türrahmen sorgen.

Die GB 2 369 849 A zeigt eine gattungsgemäße Abdeckleiste mit einem starren, eine U-förmige Aufnahme aufweisenden Befestigungsprofil, in das an jedem Schenkel je ein Dichtprofil eingeknüpft ist. Dazu sind an den Dichtprofilen und den Schenkeln des Befestigungsprofils zusammenwirkende Nuten und Rippen angeordnet. Eines der Dichtprofile weist eine mit der Seitenscheibe zusammenwirkende Dichtlippe auf.

Eine weitere Abdeckleiste mit einem anderen Befestigungsprinzip ist in der DE 34 10 193 A1 beschrieben. Diese Abdeckleiste weist ebenfalls ein U-förmiges Metall- bzw. Befestigungsprofil auf, in dem ein U-förmiges Dicht- bzw. Klemmprofil und eine Dichtlippe aus elastomerem Material form- und/oder kraftschlüssig gehalten sind. Das Dichtprofil weist im Wesentlichen die gleiche Form wie das U-förmige Metallprofil auf, ist daher auch U-förmig, enthält aber keine Metalleinlage. Beim Zusammenbau der Abdeckleiste wird das Dichtprofil von unten in das Befestigungsprofil eingeknüpft. Dabei werden die unteren Enden der Schenkel des Dichtprofils in Aussparungen in dem Befestigungsprofil aufgenommen, die ebenfalls am unteren Ende der Schenkel des U-förmigen Befestigungsprofils angeordnet sind, so dass das Dichtprofil in dem Befestigungsprofil gehalten wird.

Das Dicht- bzw. Klemmprofil muss also zusammengedrückt, von unten in das U-förmige Befestigungsprofil eingeführt und dort gespreizt werden, bis die Enden der Schenkel des Dichtprofils in die Aussparungen im Befestigungsprofil rutschen. Die Dichtlippe wird ebenfalls in das Metall- bzw. Befestigungsprofil eingeknüpft und die zusammengebaute Abdeckleiste wird auf den Türrahmen aufgeschoben. Dabei verleiht das Metall- bzw. Befestigungsprofil der Abdeckleiste die erforderliche Steifigkeit.

Nachteilig an dieser Abdeckleiste ist das aufwändige Einführen des Dichtprofils in das metallische Befestigungsprofil. Dabei muss sorgfältig kontrolliert werden, dass das Dichtungsprofil richtig im Befestigungsprofil sitzt und nicht wieder herausrutscht.

Es ist daher die Aufgabe der vorliegenden Erfindung, eine verbesserte Abdeckleiste bereitzustellen, die die Nachteile des Stands der Technik aufhebt. Vor allem soll eine Abdeckleiste bereitgestellt werden, die ein leichtes Einführen des Dichtprofils in das Befestigungsprofil und einen sicheren Halt des Dichtprofils im Befestigungsprofil ermöglicht.

Hierzu ist erfindungsgemäß vorgesehen, dass die Nut in dem Quersteg der U-förmigen Aufnahme angeordnet ist.

Durch diese Ausgestaltung ist eine sehr einfache Befestigung des Dichtprofils an bzw. in dem Befestigungsprofil möglich. Das Dichtprofil muss lediglich in das Befestigungsprofil eingeführt werden, bis die Rippe des Dichtprofils in die Nut des Befestigungsprofils eingreift. Ein Aufspreizen des Dichtprofils oder Ähnliches ist nicht notwendig. Die gewünschte Festigkeit der Abdeckleiste wird durch das starre Befestigungsprofil ermöglicht. Durch das Dichtprofil wird eine dichte Verbindung zwischen dem Befestigungsprofil und dem Rahmen der Fahrzeugtür erzeugt. Es sind keine zusätzlichen Befestigungsteile, wie Klammern oder ähnliches, notwendig, um die Abdeckleiste auf den Türrahmen festzuhalten. Durch das starre Befestigungsprofil muss auch die Dichtung keine starren Elemente, wie beispielsweise eine Metalleinlage enthalten. Es ist somit ein leichtes Aufstecken der Abdeckleiste auf den Rahmen der Fahrzeugtür möglich.

Bevorzugt kann die Nut in der Aufnahme des Befestigungsprofils schwalbenschwanzförmig ausgebildet sein und die Rippe des Dichtprofils seitliche Vorsprünge aufweisen, die in die schwalbenschwanzförmige Nut eingreifen. Durch diese Form der Nut wird ein leichtes Einführen der Rippe des Dichtprofils in die Nut der Aufnahme ermöglicht. Da die Rippe an beiden Seiten in Eingriff mit der Nut steht, entsteht ein fester Halt der Rippe in der Nut.

Eine Variante sieht vor, dass die mit der Seitenscheibe zusammenwirkende Dichtlippe im Nichtsichtbereich im Scheibenschacht angeordnet ist. Dadurch wird die weiche Dichtlippe durch das Befestigungsprofil vor äußeren Einflüssen geschützt. Zudem ist die Dichtlippe von Außen nicht sichtbar, wodurch eine ansprechende Optik der Abdeckleiste bzw. der Pkw-Tür erzielt wird.

Zweckmäßigerweise kann auch vorgesehen werden, dass das Dichtprofil die Enden der beiden Schenkel der U-förmigen Aufnahme des Befestigungsprofils umschließt. Somit wird ein leichter Einbau der Abdeckleiste auf den Türrahmen ermöglicht, Kratzer werden vermieden. Es sind also keine zusätzlichen Hilfsmittel zum Schutz vor Kratzern nötig. Da das Dichtungsprofil zwischen dem Türrahmen und dem Befestigungsprofil angeordnet ist, wird eine Berührung zwischen Türrahmen und Befestigungsprofil vermieden. Bei dem Einsatz von metallischen Befestigungsprofilen wird Kontaktkorrosion vermieden.

In einer bevorzugten Ausbildung kann vorgesehen werden, dass das Dichtprofil und die Dichtlippe aus unterschiedlichen Materialien bestehen. Dadurch können der Dichtlippe und dem Dichtprofil unterschiedliche gewünschte Eigenschaften zugewiesen werden. Beispielsweise kann die Dichtlippe relativ weich ausgebildet werden, um die Scheibe zu schützen.

Dabei kann vorgesehen werden, dass das Dichtprofil und die Dichtlippe einteilig ausgebildet sind. Die Dichtung umfasst also nur ein Bauteil, wodurch der Zusammenbau des Befestigungsprofils und der Dichtung vereinfacht wird. Die Dichtlippe wird somit im gleichen Arbeitsschritt wie das Dichtprofil am Befestigungsprofil befestigt. Durch Extrudieren ist ein sehr einfaches Herstellen dieser aus unterschiedlichen Materialien bestehenden Dichtung möglich.

Es kann aber auch vorgesehen werden, dass die Dichtlippe in das Dichtprofil eingeknüpft ist. Dadurch ist eine einfache Verbindung zwischen Dichtlippe und Dichtprofil möglich, wenn unterschiedliche Materialen für Dichtprofile und Dichtlippe verwendet werden.

In einer Variante kann vorgesehen werden, dass das Befestigungsprofil in Längserstreckung an beiden Enden geschlossen ist und die Rippe des Dichtprofils in die Nut in der Aufnahme des Befestigungsprofils eingeknüpft ist. Das Dichtprofil kann dann einfach von unten in das Befestigungsprofil eingeschoben werden, bis die Rippe in die Nut eingreift und somit einen sicheren Halt des Dichtprofils in dem Befestigungsprofil hergestellt ist. Dadurch, dass das Befestigungsprofil an beiden Enden geschlossen ist, ist eine gute Dichtwirkung an den beiden Enden möglich, es wird ein optisch ansprechender Gesamteindruck der Abdeckleiste erzielt.

Es kann aber auch vorgesehen werden, dass das Befestigungsprofil in Längserstreckung an beiden Enden geöffnet ist und die Rippe des Dichtprofils in die Nut in der Aufnahme des Befestigungsprofils eingezogen ist. Auch hierdurch ist ein sehr einfaches Befestigen des Dichtprofils in dem Befestigungsprofil möglich.

Im Folgenden werden Ausführungsformen anhand einer Zeichnung näher beschrieben. Es zeigen:
- Fig. 1: Schnitt durch eine auf einen Türrahmen aufgesteckte Abdeckleiste und
- Fig. 2: Schnitt durch eine andere Ausführungsform einer auf einen Türrahmen aufge- steckten Abdeckleiste.

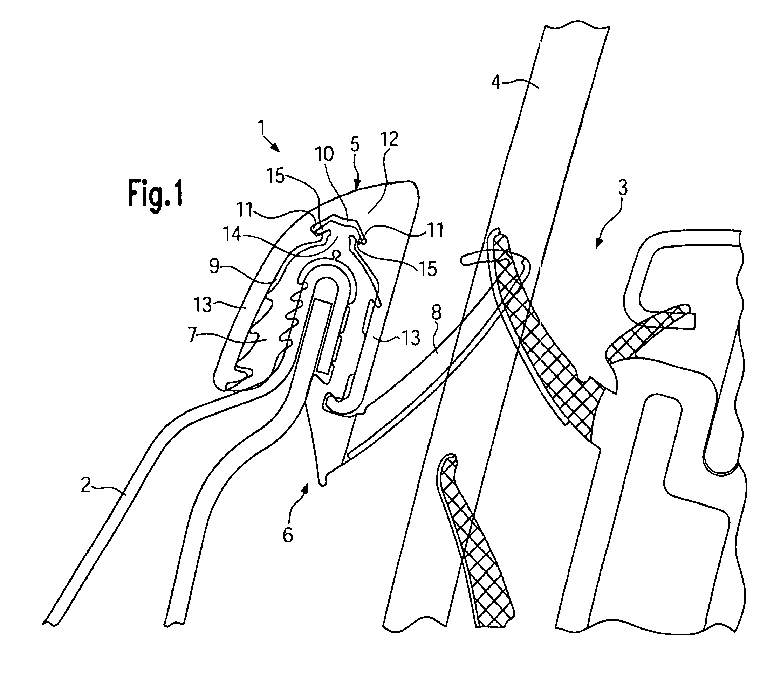

In Fig. 1 ist ein Schnitt durch eine Abdeckleiste 1 dargestellt, die auf den Türrahmen 2 eines Pkws aufgeschoben ist. Durch den Türrahmen 2 wird ein Scheibenschacht 3 ausgebildet, in den eine Seitenscheibe 4 des Pkws absenkbar ist. Die Abdeckleiste 1 dichtet den Scheibenschacht 3 nach Außen ab und hat gleichzeitig Verzierungszwecke.

Die Abdeckleiste 1 umfasst ein Befestigungsprofil 5 und eine Dichtung 6 mit einem Dichtprofil 7 und einer Dichtlippe 8. Das Befestigungsprofil 5 besteht vorzugsweise aus einem starren Material, beispielsweise Metall wie Aluminium oder Stahl. Es ist aber auch denkbar, das Befestigungsprofil 5 aus einem starren Kunststoff herzustellen. Die Dichtung 6 ist zumindest teilweise gummielastisch, wobei das Dichtprofil 7 und die Dichtlippe 8 aus unterschiedlichen Materialien bestehen können.

Das Befestigungsprofil 5 weist eine U-förmige Aufnahme 9 auf, in die das Dichtprofil 7 der Dichtung 6 eingeschoben ist. In der U-förmigen Aufnahme 9 des Befestigungsprofils 5 ist eine Nut 10 mit mindestens einer Hinterschneidung 11 vorgesehen. Die Nut 10 ist in der U-förmigen Aufnahme 9 in dem Quersteg 12 zwischen den beiden Schenkeln 13 angeordnet.

An dem Dichtprofil 7 der Dichtung 6 ist eine Rippe 14 angeordnet, die im zusammengebauten Zustand der Abdeckleiste 1 in die Nut 10 im Befestigungsprofil 5 eingreift und mit den Hinterschneidungen 11 in Eingriff steht, so dass die Dichtung 6 fest in dem Befestigungsprofil 5 gehalten ist.

Um eine gute und sichere Befestigung der Dichtung 6 in dem Befestigungsprofil 5 zu ermöglichen, ist die Nut 10 vorzugsweise schwalbenschanzförmig ausgebildet. Die Rippe 14 des Dichtprofils 7 weist dabei seitliche Vorsprünge 15 auf, die in die schwalbenschwanzförmige Nut 10 eingreifen und in den Hinterschneidungen 11 zu liegen kommen. Die Dichtlippe 8 ist vorzugsweise so angeordnet, dass sie von Außen durch das Befestigungsprofil 5 verdeckt wird und somit im Nichtsichtbereich im Scheibenschacht 3 angeordnet ist. Das Dichtprofil 7 ist so ausgebildet, dass die beiden unteren Enden der Schenkel 13 der U-förmigen Aufnahme 9 des Befestigungsprofils 5 von dem Dichtprofil 7 umschlossen werden. Dadurch wird vermieden, dass das Befestigungsprofil 5 auf dem Türrahmen 2 direkt aufliegt. Wenn das Befestigungsprofil 5 aus einem metallischen Werkstoff ist, kann dadurch Kontaktkorrosion vermieden werden. Bei der Montage der Abdeckleiste 1 auf dem Türrahmen 2 werden Kratzer vermieden.

Wie in Fig. 1 dargestellt, kann die Dichtung 6 einteilig ausgebildet werden, so dass Dichtprofil 7 und Dichtlippe 8 ein Bauteil bilden. Vorzugsweise bestehen die Dichtlippe 8 und das Dichtprofil 7 aus unterschiedlichen Materialien. Durch Extrudieren ist dennoch eine leichte Herstellung einer einteiligen Dichtung möglich.

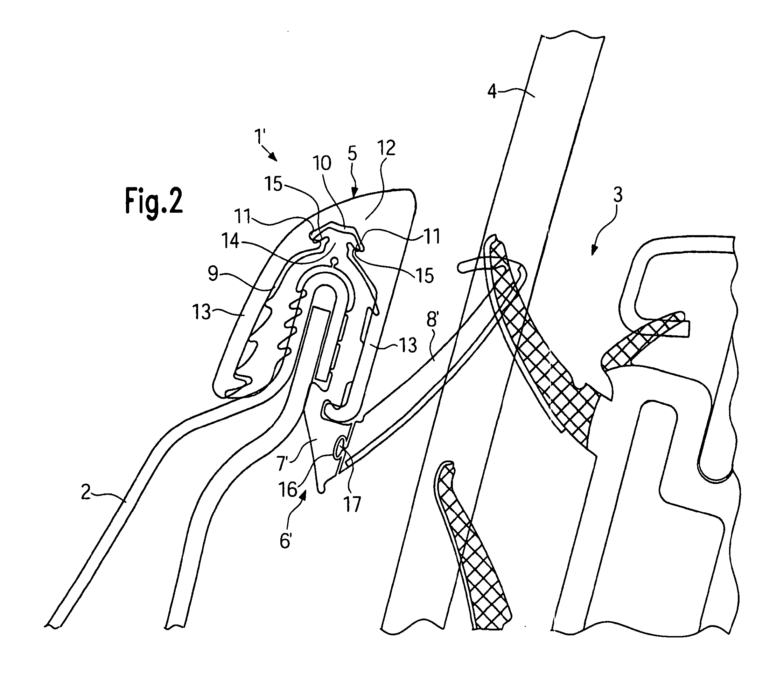

In Fig. 2 ist eine andere Ausführungsform der Abdeckleiste 1' dargestellt. Die Abdeckleiste aus Fig. 2 entspricht im Wesentlichen der in Fig. 1 beschriebenen Abdeckleiste. Im Folgenden werden daher nur die Unterschiede zwischen diesen Abdeckleisten 1, 1' beschrieben.

Die in Fig. 2 dargestellte Abdeckleiste 1' umfasst eine zweiteilige Dichtung 6'. Dichtprofil 7' und Dichtlippe 8' sind im Wesentlichen identisch zur Dichtlippe 8 und zum Dichtprofil 7. Allerdings weist das Dichtprofil 7' eine Nut 16 auf, in die eine Rippe 17 der Dichtlippe 8' eingreift. Die Dichtlippe 8' kann also leicht in das Dichtprofil 7' eingeknüpft werden und somit auch leicht ausgewechselt werden.

Es kann vorgesehen werden, dass das Befestigungsprofil 5 in Längserstreckung an beiden Enden geschlossen ist, in diesem Fall ist die Rippe 14 des Dichtprofils 7, 7' in die Nut 10 in der U-förmigen Aufnahme 9 des Befestigungsprofils 5 eingeknüpft.

Es kann aber auch vorgesehen werden, dass das Befestigungsprofil 5 in Längserstreckung an beiden Enden geöffnet ist und die Rippe 14 des Dichtprofils 7, 7' in die Nut 10 der U-förmigen Aufnahme 9 des Befestigungsprofils 5 eingezogen ist. Im Folgenden wird anhand der Figuren die Montage der Abdeckleiste 1, 1' auf dem Türrahmen 2 kurz beschrieben.

In einem ersten Schritt wird die Dichtung 6, 6' mit dem Dichtprofil 7, 7' und der Dichtlippe 8, 8' von unten in das Befestigungsprofil 5 eingeführt, bis die seitlichen Vorsprünge 15 der Rippe 14 des Dichtprofils 7, 7' in die Hinterschneidungen 11 der Nut 10 im Befestigungsprofil 5 eingreifen.

Ist das Befestigungsprofil 5 in Längserstreckung geöffnet, so kann die Dichtung 6, 6' auch in das Befestigungsprofil 5 eingezogen werden, wobei darauf geachtet werden muss, dass die Vorsprünge 15 der Rippe 14 des Dichtprofils 7, 7' in den Hinterschneidungen 11 der Nut 10 des Befestigungsprofils 5 zu liegen kommen.

Wird eine zweiteilige Dichtung 6' verwendet, so kann die Dichtlippe 8' vor oder nach der Montage des Dichtprofils 7' in dem Dichtprofil 7' befestigt werden.

Die so zusammengesetzte Abdeckleiste 1, 1' wird dann von oben auf einen Falz des Türrahmens 2, der benachbart zum Fensterschacht 3 angeordnet ist, aufgesteckt. Durch das starre Befestigungsprofil 5 wird die Dichtung 6, 6' auf den Falz des Türrahmens 2 gepresst, so dass eine feste Verbindung zwischen der Abdeckleiste 1, 1' und dem Türrahmen 2 entsteht.

Das Dichtprofil 7' kann auch als Koextrudat ausgebildet sein, indem die flexiblen Teile aus weichem und die formgebenden Teile aus festem Kunststoff bestehen.

Obwohl die Abdeckleiste für einen Schacht einer versenkbaren Scheibe beschrieben wurde, läßt sie sich auch bei feststehenden Scheiben einsetzen.

## Patentansprüche

1. Abdeckleiste (1, 1') für den Rand eines Scheibenschachts (3) einer in den Scheibenschacht (3) absenkbaren Seitenscheibe (4) eines Pkws mit einem starren, eine U-förmige Aufnahme (9) aufweisenden Befestigungsprofil (5), mit einer zumindest teilweise gummielastischen Dichtung (6, 6'), welche eine mit der Seitenscheibe (4) zusammenwirkende Dichtlippe (8, 8') und ein in die Aufnahme (9) einsetzbares Dichtprofil (7, 7') aufweist, und mit mindestens einer in der U-förmigen Aufnahme (9) angeordneten Nut (10) mit mindestens einer Hinterschneidung (11), in die eine an dem Dichtprofil (7, 7') angeordnete Rippe (14) eingreift, **dadurch gekennzeichnet, dass** die Nut (10) in dem Quersteg (12) der U-förmigen Aufnahme (9) angeordnet ist.

2. Abdeckleiste (1, 1') nach Anspruch 1, **dadurch gekennzeichnet, dass** die Nut (10) in der Aufnahme (9) des Befestigungsprofils (5) schwalbenschwanzförmig ausgebildet ist und die Rippe (14) des Dichtprofils (7, 7') seitliche Vorsprünge (15) aufweist, die in die schwalbenschwanzförmige Nut (10) eingreifen.

3. Abdeckleiste (1, 1') nach Anspruch 1 oder 2, **dadurch gekennzeichnet, dass** die mit der Seitenscheibe (4) zusammenwirkende Dichtlippe (8, 8') im Nichtsichtbereich im Scheibenschacht (3) angeordnet ist.

4. Abdeckleiste (1, 1') nach einem der Ansprüche 1 bis 3, **dadurch gekennzeichnet, dass** das Dichtprofil (7, 7') die Enden der beiden Schenkel (13) der U-förmigen Aufnahme (9) des Befestigungsprofils (5) umschließt.

5. Abdeckleiste (1, 1') nach einem der Ansprüche 1 bis 4, **dadurch gekennzeichnet, dass** das Dichtprofil (7, 7') und die Dichtlippe (8, 8') aus unterschiedlichen Materialien bestehen.

6. Abdeckleiste (1) nach einem der Ansprüche 1 bis 5, **dadurch gekennzeichnet, dass** das Dichtprofil (7) und die Dichtlippe (8) einteilig ausgebildet sind.

7. Abdeckleiste (1') nach einem der Ansprüche 1 bis 5, **dadurch gekennzeichnet, dass** die Dichtlippe (8') in das Dichtprofil (7') eingeknüpft ist.

8. Abdeckleiste (1, 1') nach einem der Ansprüche 1 bis 7, **dadurch gekennzeichnet, dass** das Befestigungsprofil (5) in Längserstreckung an beiden Enden geschlossen ist und die Rippe (14) des Dichtprofils (7, 7') in die Nut (10) in der Aufnahme (9) eingeknüpft ist.

9. Abdeckleiste (1, 1') nach einem der Ansprüche 1 bis 7, **dadurch gekennzeichnet, dass** das Befestigungsprofil (5) in Längserstreckung an beiden Enden geöffnet ist und die Rippe (14) des Dichtprofils (7, 7') in die Nut (10) in der Aufnahme (9) des Befestigungsprofils (5) eingezogen ist.

## Claims

1. Trim strip (1, 1') for the edge of a window channel (3) of a side window (4) of a passenger vehicle which can be lowered into the window channel (3), comprising a rigid fixing profile (5) with a U-shaped housing (9), an at least partially rubber-elastic seal (6, 6') comprising a seal lip (8, 8') co-operating with the side window (4) and a seal profile (7, 7') which can be inserted in the housing (9), and at least one groove (10) disposed in the U-shaped housing (9) with at least one undercut (11) in which a rib (14) disposed on the seal profile (7, 7') locates, **characterised in that** the groove (10) is disposed in the transverse web (12) of the U-shaped housing (9).

2. Trim strip (1, 1') as claimed in claim 1, **characterised in that** the groove (10) in the housing (9) of the fixing profile (5) is of a dovetailed design and the rib (14) of the seal profile (7, 7') has lateral projections (15) which locate in the dovetailed groove (10).

3. Trim strip (1, 1') as claimed in claim 1 or 2, **characterised in that** the seal lip (8, 8') co-operating with the side window (4) is disposed in the window channel (3) in the non-visible area.

4. Trim strip (1, 1') as claimed in one of claims 1 to 3, **characterised in that** the seal profile (7, 7') sits round the ends of the two legs (13) of the
U-shaped housing (9) of the fixing profile (5).

5. Trim strip (1, 1') as claimed in one of claims 1 to 4, **characterised in that** the seal profile (7, 7') and the seal lip (8, 8') are made from different materials.

6. Trim strip (1) as claimed in one of claims 1 to 5, **characterised in that** the seal profile (7) and the seal lip (8) are of an integral design.

7. Trim strip (1') as claimed in one of claims 1 to 5, **characterised in that** the seal lip (8') is fitted into the seal profile (7').

8. Trim strip (1, 1') as claimed in one of claims 1 to 7, **characterised in that** the fixing profile (5) is closed at both ends in the longitudinal extension and the rib (14) of the seal profile (7, 7') is fitted into the groove (10) in the housing (9).

9. Trim strip (1, 1') as claimed in one of claims 1 to 7, **characterised in that** the fixing profile (5) is open at both ends in the longitudinal extension and the rib (14) of the seal profile (7, 7') is threaded into the groove (10) in the housing (9) of the fixing profile (5).

## Revendications

1. Baguette couvre-joint (1, 1') pour le bord d'un logement pour vitre (3) d'une vitre latérale (4) d'un véhicule de tourisme qui est apte à être abaissée dans ledit logement (3), avec un profilé de fixation (5) rigide qui comporte une cavité en U (9), avec un joint d'étanchéité (6, 6') au moins en partie élastique qui comporte une lèvre d'étanchéité (8, 8') coopérant avec la vitre latérale (4) et un profilé d'étanchéité (7, 7') qui est apte à être inséré dans la cavité (9), et avec au moins une rainure (10) qui est disposée dans la cavité en U (9), qui présente au moins une contre-dépouille (11) et dans laquelle pénètre une nervure (14) disposée sur le profilé d'étanchéité (7, 7'), **caractérisée en ce que** la rainure (10) est disposée dans la branche transversale (12) de la cavité en U (9).

2. Baguette couvre-joint (1, 1') selon la revendication 1, **caractérisée en ce que** la rainure (10) est conçue avec une forme de queue d'aronde dans la cavité (9) du profilé de fixation (5), et la nervure (14) du profilé d'étanchéité (7, 7') présente des saillies latérales (15) qui pénètrent dans la rainure en queue d'aronde (10).

3. Baguette couvre-joint (1, 1') selon la revendication 1 ou 2, **caractérisée en ce que** la lèvre d'étanchéité (8, 8') qui coopère avec la vitre latérale (4) est disposée dans le logement pour vitre (3) dans la zone non visible.

4. Baguette couvre-joint (1, 1') selon l'une des revendications 1 à 3, **caractérisée en ce que** le profilé d'étanchéité (7, 7') enveloppe les extrémités des deux branches (13) de la cavité en U (9) du profilé de fixation (5).

5. Baguette couvre-joint (1, 1') selon l'une des revendications 1 à 4, **caractérisée en ce que** le profilé d'étanchéité (7, 7') et la lèvre d'étanchéité (8, 8') se composent de matériaux différents.

6. Baguette couvre-joint (1) selon l'une des revendications 1 à 5, **caractérisée en ce que** le profilé d'étanchéité (7) et la lèvre d'étanchéité (8) sont formés d'une seule pièce.

7. Baguette couvre-joint (1') selon l'une des revendications 1 à 5, **caractérisée en ce que** la lèvre d'étanchéité (8') est emboîtée dans le profilé d'étanchéité (7').

8. Baguette couvre-joint (1, 1') selon l'une des revendications 1 à 7, **caractérisée en ce que** le profilé de fixation (5) est fermé à ses deux extrémités, dans le sens longitudinal, et la nervure (14) du profilé d'étanchéité (7, 7') est emboîtée dans la rainure (10) prévue dans la cavité (9).

9. Baguette couvre-joint (1, 1') selon l'une des revendications 1 à 7, **caractérisée en ce que** le profilé de fixation (5) est ouvert à ses deux extrémités, dans le sens longitudinal, et la nervure (14) du profilé d'étanchéité (7, 7') est enfoncée dans la rainure (10) prévue dans la cavité (9) du profilé de fixation (5).
